(19) Europäisches Patentamt
European Patent Office
Office européen des brevets

(11) Publication number: **0 359 272 B1**

(12) **EUROPEAN PATENT SPECIFICATION**

(45) Date of publication of patent specification: **08.12.93**

(51) Int. Cl.5: **C08G 18/50**, C08G 18/10

(21) Application number: **89117062.3**

(22) Date of filing: **14.09.89**

# (54) Fluorinated polyurethanes containing rubber-like polyoxyperfluoroalkylene blocks and rigid blocks.

(30) Priority: **15.09.88 IT 2194688**

(43) Date of publication of application:
**21.03.90 Bulletin 90/12**

(45) Publication of the grant of the patent:
**08.12.93 Bulletin 93/49**

(84) Designated Contracting States:
**BE DE ES FR GB NL SE**

(56) References cited:
**EP-A- 0 192 190**
**EP-A- 0 235 380**

(73) Proprietor: **AUSIMONT S.p.A.**
**31, Foro Buonaparte**
**I-20100 Milano(IT)**

(72) Inventor: **Re, Alberto, Dr.**
**18, via Castelmorrone**
**I-20129 Milan(IT)**
Inventor: **Giavarini, Francesco**
**3, via Puccini**
**I-24060 Castelli Calepio Bergamo(IT)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

EP 0 359 272 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to fluorinated polyurethanes, particularly polyurethanes containing rubber-like polyoxyperfluoroalkylene blocks and rigid blocks.

One object of the present invention is to provide fluorinated polyurethanes having a low glass transition temperature (Tg even lower than -110°C) and good mechanical properties, which may be used for structural applications under severe working conditions.

Polyurethanes (PU) which comprise polyoxyperfluoroalkylene blocks derived from perfluoropolyethers (PFPE) having hydroxylated end groups are known.

Products of this type are described, in particular, in Italian patent No. 903 446 and are characterized by a Tg lower than -80°C, wherefore they retain their flexibility and elastic properties even at very low temperatures.

The structure of these materials, which predominantly is characterized by the perfluoropolyether chain, however, entails a poor mechanical strength. In order to overcome this drawback, it is necessary to give them a threedimensional structure by crosslinking them either by means of trifunctional chemical agents or through the formation of allophanate or isocyanurate.

The materials thus obtained, however, do not possess an optimal combination of mechanical characteristics as regards hardness, tensile strength, modulus of elasticity and elongation. In particular, the hardness values are lower than 50 Shore A and the tensile strength values are, generally, lower than 10 $kg/cm^2$. Furthermore, since these materials are crosslinked, they cannot be processed according to methods typically used for thermoplastic materials such as extrusion, injection moulding and blow moulding.

Said products also involve the problem of processing waste which cannot be converted and, therefore, cannot be re-used.

A substantial improvement in the combination of the mechanical properties of said products has been achieved by incorporating therein encumbering blocks consisting of aromatic or cycloaliphatic diols, according to the process described in EP-A-192 190.

The fluorinated polyurethanes obtained through this process are characterized by a numerical ratio of blocks derived from the aromatic or cycloaliphatic diol to perfluoropolyether blocks of $\leqq 1$. The resulting materials, however, do not show very high tensile strength values. In most cases said values are not higher than 25 $kg/cm^2$. In order to obtain higher values it is necessary to use bisphenols at a high ratio, of the order of 1 (see example H of the above patent). In this case, the presence of the aromatic diols in the polymeric structure is a limitation to the use of said materials at high temperatures. Furthermore, the elastomeric properties at low temperatures become impaired since, in spite of the low Tg, the modulus of elasticity is too high for the usual applications of rubbers.

It is, thus, an object of the present invention to provide fluorinated polyurethanes having a glass transition temperature lower than -80°C and being characterized by hardness values ranging from 50 Shore A to 75 Shore D and by tensile strength values equal to or higher than 30 $kg/cm^2$.

The polyurethane elastomers according to the present invention (which, preferably, have an average molecular weight of from 25000 to 250000 and, Particularly, of from 50000 to 150000) have a structure which comprises alternating rubber-like blocks (a) (i.e. blocks showing rubber-like properties) and rigid blocks (b).

The rubber-like blocks (a) are composed of polyoxyperfluoroalkylene chains while the rigid blocks (b), which influence and characterize the mechanical properties of the polymers, may be obtained by using, as starting materials, difunctional compounds not containing perfluoropolyether or polyether (polyether polyol) chains, said difunctional compounds being selected from hydrogenated (i.e. non-fluorinated) or also fluorinated aliphatic diols and diamines having a short chain (i.e., not exceeding 12 carbon atoms).

In the products according to the present invention, the numerical ratio of rigid blocks (b) to rubber-like blocks (a) is $\geqq 1$ and, preferably, ranges from 1 to about 4.5.

In this way it is possible to obtain thermoplastic fluorinated polyurethanes which can be processed according to technologies typically employed with thermoplastic materials.

A part of the difunctional short-chain ($C_2$-$C_{12}$) molecules may have a functionality of >2, resulting in crosslinked products having the mechanical properties described above.

In the polyurethanes according to the present invention the rubber-like blocks (a) are composed of sequences of oxyperfluoroalkylene units preferably having an average molecular weight of from 1500 to 15000, particularly from 2000 to 6000.

It has been found that, when the molecular weight of the perfluoropolyether blocks is increased, it is advisable to also employ increasing ratios of rigid blocks (b) to rubber-like blocks (a) in order to obtain a combination of optimal properties of the final polyurethane.

As starting materials, the rubber-like blocks (a) are, preferably, derived from perfluoropolyether diols belonging to the following classes of compounds:

a)

$HO-(CH_2CH_2O)_z-CH_2-CF_2O-(C_2F_4O)_m(CF_2O)_n-CF_2-CH_2-(OCH_2CH_2)_z-OH$

wherein z independently ranges from 0 to 3 (extremes included) and the ratio m/n ranges from 0.2 to 2, preferably from 0.5 to 1.2, m and n having values such that the molecular weight is within the range indicated above;

b) $HO-CH_2CF_2-(C_3F_6O)_r(C_2F_4O)_s(CFXO)_t-CF_2CH_2-OH$

wherein:

X = F or $CF_3$; r, s and t are independently 0 or represent integers of from 1 to 100, with the proviso that (r + s) is different from 0 and that r, s and t have values such that the molecular weight is within the range defined above;

c)

$HOCH_2CF_2CH_2-(OCF_2CF_2CH_2)_p-OR_fO-(CH_2CF_2CF_2O)_q-CH_2CF_2CF_2OH$

wherein:

$R_f$ represents a fluoroaliphatic group, preferably a perfluoroalkylene group, also containing heteroatoms (preferably from 2 to 4 O and/or N atoms) in the chain, said fluoroaliphatic group, particularly when $R_f$ is a perfluoroalkylene group, containing from 1 to 21, preferably from 1 to 4, carbon atoms in the chain; and p and q each are integers of from 1 to 100, with the proviso that (p + q) >2 and $R_f$, p and q are such that the molecular weight is within the range defined above;

d)

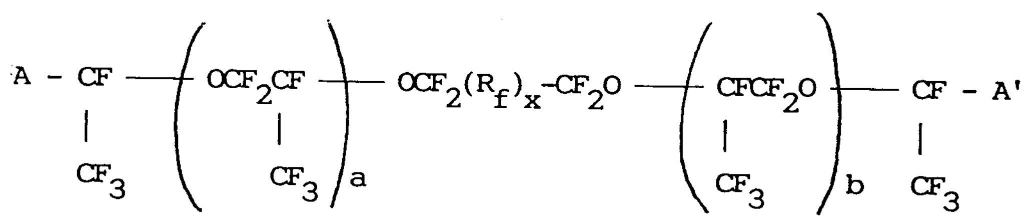

wherein:

$R_f$ represents a fluoroaliphatic group as defined above for structure c), A and A' each represent an end group containing one or more -OH groups, preferably a $-CH_2OH$ group, x is 0 or 1, a and b each are integers of from 1 to 100, with the proviso that (a + b) >2 and that $R_f$, x, a and b are such that the molecular weight is within the range defined above.

The diols of type a) are described in Italian patent 903 446. The diols of type b) are preparable according to the methods described in US-A-3 847 978 and 3 810 874, starting from the fluorides of the diacids described in US-A-3 665 041.

The diols of type c) can be obtained by reduction of the diacyl fluorides described in EP-A-148 482.

The diols of group d) are described in EP-A-151 877.

It is also possible to use diols with repeating units of formulae $-CF_2CF_2O-$, $-CF_2CF_2CF_2O-$ and $-CF(CF_3)CF_2O-$. These products are preparable according to the process described in US-A-4 720 527.

As starting material, the perfluoropolyether block can also be derived from perfluoropolyethers with perfluorooxyalkylene chains of the type described above, wherein both of the end groups are isocyanate groups. Compounds of this type are described in US-A-3 810 874.

The rubber-like blocks (a) may also, in part, be composed of hydrogenated (i.e. non-fluorinated) polyols, both of the polyester polyol type and of the polyether polyol type. Examples thereof are poly(ethylene glycol), poly(propylene glycol), poly(tetramethylene glycol), poly(1,4-butanediol adipate), poly(ethanediol-1,4-butanediol adipate), poly(1,6-hexanediol-neopentyl glycol adipate), poly($\epsilon$-caprolactam) and poly(1,6-hexanediol carbonate).

In the polyurethanes according to the present invention the rigid blocks (b) (which have an average molecular weight of from 28 to 1000, preferably from 100 to 500) result from the use of the following starting materials:

a) Hydrogenated (non-fluorinated) or fluorinated short-chain ($C_2$-$C_{12}$) aliphatic diols

Examples of short-chain hydrogenated diols are ethylene glycol, 1,4-butanediol and 1,6-hexanediol. Examples of short-chain fluorinated diols are $C_2F_4$ telomers with OH end groups and perfluoropolyether $\alpha,\omega$-diols having a molecular weight of from 400 to 500, such as Fomblin$^{(R)}$Z, produced by Montefluos.

b) Hydrogenated short-chain ($C_2$-$C_{12}$) or aromatic ($C_6$-$C_{12}$) diamines and hydrazines

Examples of hydrogenated short-chain (aliphatic and aromatic) diamines are ethylene diamine, hexamethylene diamine, 3,3'-dichloro-4,4'-diamino diphenylmethane and m-phenylene diamine.

Examples of diisocyanates utilizable for preparing the polyurethanes of the present invention are aromatic diisocyanates (preferably having 6 to 18 carbon atoms in the basic skeleton) such as, for example, 2,4- or 2,6-toluene diisocyanate, xylylene diisocyanate, 4,4′-diphenylmethane diisocyanate, naphthalene-1,5-diisocyanate and p-phenylene diisocyanate; and (cyclo)aliphatic diisocyanates (preferably having 2 to 20 and, particularly, 4 to 18 carbon atoms in the basic skeleton) such as, for example, hexamethylene diisocyanate, isophorone diisocyanate, 4,4′-dicyclohexylmethane diisocyanate and cyclohexyl-1,4-diisocyanate. Said diisocyanates may, also, be of the fluorinated type such as, for example, tetrafluorophenylene diisocyanate or 6-chloro-2,4,5-trifluorobenzene-1,3-diisocyanate.

As mentioned before, it is also possible to use a perfluoropolyether diisocyanate.

The polyurethanes of the present invention can be obtained in a more or less crosslinked state by additionally using for their preparation crosslinking agents, i.e., reagents having a functionality higher than 2. Examples of such reagents are trimethylol propane, glycerine, diethylene triamine, tertiary amine compounds of the type described in EP-A-291 855 and tri- or polyisocyanates such as hexamethylene diisocyanate trimer (Desmodur$^{(R)}$ N) and toluene diisocyanate trimer (Desmodur$^{(R)}$ IL).

Preparation of the polyurethanes

The fluorinated polyurethanes of the present invention can, advantageously, be prepared by operating in two steps (prepolymer method):

First step Prepolymer synthesis

The perfluoropolyether macroglycol, optionally dissolved in a suitable solvent, is reacted with excess diisocyanate so that the ratio NCO/OH groups is, for example, ≧2, thereby obtaining an isocyanate-terminated prepolymer.

This step can be omitted if a fluorinated diisocyanate having a PFPE structure is utilized.

Second Step Chain Extension

The procedure to be followed for carrying out the second step depends on the type of material to be obtained (thermoplastic or thermosetting).

A. Thermoplastic polyurethanes:

The second step can be conducted either in solution or in mass. In the former case, the isocyanate prepolymer solution or the perfluoropolyether diisocyanate dissolved in a suitable solvent, optionally containing a non-perfluoropolyether diisocyanate, is reacted, at 20 to 70 °C, with the diol and/or the diamine in order to obtain an NCO/OH(NH) group ratio equal to about 1. The rigid blocks composed of diol-and diamine-derived units will be present in the structure of the final polymer in a numerical ratio of ≧1 with respect to the rubber-like blocks composed of perfluoropolyether chains.

The reaction time usually ranges from 1 to 8 hours. The progress of the reaction may be followed by means of I.R. spectroscopy, monitoring the disappearance of the NCO band at 2270 $cm^{-1}$. Upon completion of the reaction the polymer may be precipitated with excess $H_2O$ and, after a few further washings with $H_2O$, filtered and vacuum-dried.

In the latter case, the isocyanate prepolymer, after removal of the solvent, or the perfluoropolyether diisocyanate, optionally also containing a non-perfluoropolyether diisocyanate, is reacted, at 20 to 120 °C, with the diol and/or diamine in order to obtain an NCO/OH(NH) ratio resulting in the formation of chains as defined above. Generally, the reaction time ranges from 1 to 8 hours. The progress of the reaction may be followed by means of I.R. spectroscopy as described above. Upon completion of the

reaction, the polymeric and highly viscous mass may be extruded and pelletized.

B: Thermosetting polyurethanes:

The second step is conducted by reacting the isocyanate prepolymer with a mixture consisting of:

- a short-chain diol and/or diamine or an aromatic diamine and
- a crosslinking agent.

In said mixture, the short-chain molecule/crosslinking agent equivalent ratio may range from 0.1 to 10, preferably from 0.5 to 2.

The reaction may be conducted in mass by mixing the components at 50 to 120°C and then pouring the mixture into a mould.

Crosslinking usually occurs at 20 to 120°C during a period of time varying from 1 to 24 hours.

Alternatively, the thermosetting polyurethane may be prepared by starting from an -OH-terminated prepolymer (prepared by adding the diol to the -NCO-terminated prepolymer of the first step) and by subsequent crosslinking with a triisocyanate (or polyisocyanate).

The yield of the fluorinated polyurethane synthesis reaction can be raised by adding a suitable catalyst system such as, for example, tin derivatives (for example, dibutyl tin dilaurate, dibutyl tin acetate, dibutyl tin oxide), iron derivatives (such as ferroacetylacetonate), titanium alcoholates (such as titanium tetraisopropylate) and tertiary amines (such as triethylamine or N-methyl morpholine), in amounts ranging from 0.001 to 2% by weight, preferably from 0.01 to 0.5% by weight, based on the total weight.

The fluorinated polyurethanes according to the present invention are thermoplastic elastomers characterized by the following properties:

- Tensile strength equal to at least 30 kg/cm$^2$,
- Hardness ranging from 50 Shore A to 75 Shore D,
- Excellent flexibility at very low temperatures, even lower than -100°C,
- Resistance to hydrolytic degradation and to attack by most of the usual chemical agents, oils and fats,
- Good surface properties such as smoothness (self-lubrication) and oil and water repellency,
- Excellent optical properties (low refractive index) and
- Excellent dielectric properties.

The fluorinated polyurethanes can be formulated by adding thereto, for example, conventional fillers and usual pigments, antioxidants, U.V. stabilizers and reinforcing fillers such as carbon black, stearic acid and graphite. Furthermore, owing to a sufficient fluorine content, they are compatible with fillers such as fluorinated polymers, in particular, polytetrafluoroethylene.

## Applications

The fluorinated polyurethanes of the present invention may be used in the manufacture of structural elements such as gaskets, couplings, components for valves and fittings, insulating and protective membranes, adhesives and sealing agents to be used under very severe conditions, in particular, where the elastomeric properties must be retained at very low temperatures (arctic rubbers).

Particularly interesting fields of use are, therefore, the aeronautical, aerospace, oil and chemical industries.

Another possible application in the field of thermoplastics is represented by the use as soluble resins, characterized by a high film-forming power and coating power, for use in the electronic industry as conformable coatings having excellent resistance to chemical agents and very good optical and dielectric properties.

The polyurethanes of the present invention may, furthermore, be employed as components of paint formulations, characterized by a high oil and water repellency, a low critical surface tension and a low friction coefficient, for use in the textile, leather, marine, naval and aeronautical sectors.

Another possible application of particular interest is their use in the protection and lubrication of surfaces subjected to friction and wear such as, for example, magnetic recorders and accessories for cassettes containing magnetic tapes.

Still another possible application of particular interest is the use in structural materials to be used in the biomedical field, for the manufacture of artificial organs, artificial blood vessels, membranes and structural materials which must be endowed with excellent mechanical and anti-thrombosis properties and resistance to degradation.

Characterization of the polyurethanes

The fluorinated polyurethanes have been characterized according to the following standards.

| | |
|---|---|
| - Hardness (Shore A and Shore D) | ASTM 2240 |
| - Tensile properties (tensile strength (T.S.) and 100% modulus (M 100%)) | ASTM D 412 |
| - Elongation at break (%) (E.B.) | ASTM D 412 |
| - Friction coefficient | ASTM D 1894 |
| - Contact angle | ATICELCA.MC 21-72 |
| - Tg by means of differential scanning calorimetry (D.S.C.) | |

The following examples are given to illustrate the invention and are not to be understood as a limitation of possible embodiments thereof.

In the examples the following abbreviations are used:
ZDOL = compound of class a), wherein z = 0;
ZDOL Tx = compound of class a), wherein z >1.3;
Delifrene (R) = trichlorotrifluoroethane of Montefluos;
PFPE = perfluoropolyetherdiol.

EXAMPLE 1

Synthesis of an isocyanate-terminated prepolymer by reaction of a perfluoropolyether diol with a diisocyanate.

A perfluoropolyether, MW 2000 ZDOL, with $-CH_2OH$ end groups and having an equivalent weight of 1116 and, as isocyanate, 4,4′-dicyclohexylmethane diisocyanate were used. The preparation was conducted in solution.

11.75 g of diisocyanate, dissolved in 30 ml of a Delifrene(R)/tetrahydrofuran (THF) mixture (1:1), were introduced into a four-neck flask equipped with stirrer, reflux condenser and dropping funnel and connected to a nitrogen storage tank. The temperature was raised to 50 °C and, in a nitrogen atmosphere, 50 g of diol were added dropwise. The reaction was continued at the above temperature until the desired conversion (3.05% by weight of NCO groups) was reached (after about 3 hours). The reaction mixture was then cooled in order to stop the reaction. After removal of the solvent the prepolymer was isolated in the form of a colourless and highly viscous liquid.

EXAMPLES 2 TO 9

A series of prepolymers was prepared by following the method and the conditions described in example 1.

As perfluoropolyether diols the following ones were used:

(i) diol MW 2000 ZDOL, having an equivalent weight of 1116;
(ii) an analogous compound MW 4000 ZDOL, having an equivalent weight of 2103;
(iii) a PFPE diol with $-CH_2CH_2OH$ end groups having an equivalent weight of 1150 (referred to as MW 2000 ZDOL Tx);
(iv) an analogous compound having an equivalent weight of 2260 (referred to as MW 4000 ZDOL Tx).

As diisocyanates the following ones were used:

(i) 4,4′-diphenylmethane diisocyanate (MDI);
(ii) 4,4′-dicyclohexylmethane diisocyanate (HMDI);
(iii) isophorone diisocyanate (IPDI).

The characteristics of the prepolymers obtained are given in tables 1 and 2. These compounds are high-viscosity liquids or low-melting solids. They must be stored under vacuum to prevent them from coming into contact with moisture. Under these conditions they are stable for many months.

TABLE 1

| EXAMPLE | ZDOL 2000 (eq) | ZDOL 4000 (eq) | HMDI (eq) | MDI (eq) | IPDI (eq) | % BY WEIGHT NCO | % BY WEIGHT PFPE |
|---|---|---|---|---|---|---|---|
| 1 | 1 | - | 2 | - | - | 3.05 | 87 |
| 2 | - | 1 | 2 | - | - | 1.78 | 89 |
| 3 | 1 | - | - | 2 | - | 3.07 | 82 |
| 4 | - | 1 | - | 2 | - | 1.78 | 89 |
| 5 | - | 1 | - | - | 2 | 1.81 | 90 |

TABLE 2

| EXAMPLE | ZDOL 2000 TX (eq) | ZDOL 4000 TX (eq) | HMDI (eq) | IPDI (eq) | % BY WEIGHT PFPE | % BY WEIGHT NCO |
|---|---|---|---|---|---|---|
| 6 | 1 | - | 2 | - | 81 | 2.97 |
| 7 | - | 1 | 2.5 | - | 87 | 2.45 |
| 8 | - | 1 | 2 | - | 90 | 1.66 |
| 9 | 1 | - | - | 3 | 87 | 3.24 |

EXAMPLE 10

The preparation of polyurethanes of the present invention by means of reaction in solution is described in this example.

A solution of 60 g (0.022 moles) of the prepolymer of example 1, dissolved in 30 ml of a Delifrene[(R)]/THF mixture (1:1), was introduced into a flask equipped with stirrer and connected to an $N_2$ storage tank. The solution was heated to 55 °C and, after intense stirring, 1.96 g (0.022 moles) of 1,4-butane diol, dissolved in 10 ml of THF, were added dropwise to the solution. The reaction was monitored by means of I.R. spectroscopy, following the decrease of the NCO band at 2270 $cm^{-1}$. After 6 hours, when the degree of polymerization to be obtained had been reached, the polymer was precipitated with 1 liter of $H_2O$. The precipitate was repeatedly washed with $H_2O$, filtered, and dried for 12 hours under vacuum at 60 °C.

At the end, the polymer was obtained in the form of a granular light-coloured solid.

The polymer was placed into a 120x120x2 mm mould and then moulded at 160 °C by means of a press. A small transparent plate of thermoplastic polyurethane was obtained. The mechanical properties thereof are reported in table 3.

EXAMPLES 11 TO 14

Following the procedure of example 10, a series of thermoplastic polyurethanes was prepared by using the prepolymers of examples 1 to 7.
1,4-Butane diol (BDO) was used as chain extender. Table 3 indicates the various formulations and the mechanical characteristics of the test pieces obtained after moulding.

TABLE 3

| EXAMPLE | PREPOLYMER (ref. ex.) | Chain extender | % b.weight chain extender | melting T Tg (°C) | hardness (Shore A) | $M_{100\%}$ ($kg/cm^2$) | Tensile strength ($kg/cm^2$) | Elong. at break (%) |
|---|---|---|---|---|---|---|---|---|
| 10 | 1 | BDO | 3.2 | -108 | 90 | 58 | 76 | 495 |
| 11 | 2 | BDO | 1.9 | -112 | 60 | 26 | 31 | 290 |
| 12 | 5 | BDO | 1 | -110 | 60 | 23 | 31 | 350 |
| 13 | 6 | BDO | 3.1 | -108 | 87 | 57 | 70 | 524 |
| 14 | 7 | BDO | 2.6 | -110 | 73 | 41 | 44 | 170 |

EXAMPLE 15

This example illustrates the preparation of a polyurethane of the present invention by means of reaction in mass of the prepolymer and a chain extender.

1.86 g (0.022 moles) of 1,4-butane diol (previously dried) were added to 60 g (0.022 moles) of the prepolymer of example 1 at a temperature of 80 ° C in a reactor equipped with a bottom discharge.

The resulting mixture was vigorously stirred in a nitrogen atmosphere. The progress of the reaction was followed by monitoring either the disappearance of the I.R. band at 2270 $cm^{-1}$ or the viscosity increase. After one hour, the temperature was raised to 120 ° C and, after a further 45 minutes, i.e., after having reached the desired degree of polymerization, vacuum was applied in order to strip off the gases from the mixture, which was then extruded and pelletized. In order to obtain a characterizable test piece, the pellets were placed into a 120x120x2 mm mould and then moulded by means of a press.

A small transparent thermoplastic polyurethane plate was obtained. After post-curing at 100 ° C for 12 hours, the mechanical properties indicated in table 4 were determined.

EXAMPLES 16 TO 20

Following the procedure described in example 15, several thermoplastic polyurethanes were prepared. The prepolymers of examples 1 to 9 and the following chain extenders were used:

- 1,4-butane diol (BDO)
- 3,3,4,4,5,5,6,6-octafluoro-1,8-octane diol (OFOD).

The various formulations and the corresponding mechanical characteristics are indicated in table 4.

TABLE 4

| EXAMPLE | PREPOLYMER (ref. ex.) | Chain extender | % b. wg. chain extender | Tg (°C) | hardness (Shore A) | $M_{100\%}$ ($kg/cm^2$) | Tensile strength ($kg/cm^2$) | Elong. at break (%) |
|---|---|---|---|---|---|---|---|---|
| 15 | 1 | BDO | 3 | -108 | 82 | 59 | 50 | 330 |
| 16 | 1 | OFOD | 9.2 | -115 | 68 | 26 | 31 | 350 |
| 17 | 3 | BDO | 3 | -105 | 76 | 32.5 | 65.5 | 476 |
| 18 | 6 | BDO | 2.9 | -108 | 87 | 64 | 64 | 353 |
| 19 | 8 | BDO | 1.7 | -115 | 72 | 38 | 43 | 232 |
| 20 | 9 | BDO | 3.2 | -110 | 66 | 30 | 70 | 655 |

EXAMPLE 21

A polyurethane of the present invention was prepared by utilizing a mixture of a perfluoropolyether diol and a hydrogenated macroglycol. As hydrogenated macroglycol a poly(tetramethylene glycol) having an equivalent weight of 501.5 (PTMEG 1000) and, as fluorinated macroglycol, MW 2000 ZDOL Tx were used.

24 g of PTMEG 1000 in 50 ml of THF were placed into a 500 ml flask equipped with mechanical stirrer, dropping funnel and reflux condenser and connected to a $N_2$ storage tank. Subsequently, 50 g of MW 2000 ZDOL Tx, dissolved in 50 ml of Delifrene(R), were added dropwise. The solution was heated to 60 °C under a nitrogen atmosphere, adding 100 ml of Delifrene(R) in order to obtain a homogeneous solution. 24 g of HMDI were then added, whereafter the whole mixture was allowed to react for 4 hours until the desired conversion was reached. The condensates were then recovered and 4 g of BDO, dissolved in 50 ml of THF, were gradually added while, simultaneously, a solvent fraction rich in Delifrene(R) was separated. 100 ml of solvent (8:2 Delifrene(R)/THF) were separated. Upon completion of the addition, 50 ml of THF were introduced into the reaction flask. After a 16 hour reaction, which was followed by means of I.R. spectroscopy, the desired degree of polymerization was reached and the polymer was discharged into $H_2O$, repeatedly washed and then filtered and dried.

The polymer obtained was in the form of a white granular solid which was placed into a 120x120x2 mm mould and was moulded at 160 °C by means of a press. The transparent plate of thermoplastic polyurethane thus obtained was utilized for determining the mechanical properties, which were as follows:

| Hardness (Shore A) | M100% (kg/cm$^2$) | T.S. (kg/cm$^2$) | E.B. (%) |
|---|---|---|---|
| 76 | 53 | 78 | 715 |

EXAMPLE 22

Preparation of a crosslinked fluorinated polyurethane.

80 g of the prepolymer of example 9 were reacted, in a reactor equipped with mechanical stirrer and bottom discharge, with a mixture consisting of 1.4 g of 1,4-butane diol and 1.35 g of 1,1,1-tris-(hydroxymethyl)-propane (TMP) at a temperature of 80 °C under intense stirring and maintaining an $N_2$ flow. After 20 minutes the temperature was brought to 120 °C and the fluid mass was degassed and poured into a 120x120x2 mm mould. After a four-hour crosslinking at 120 °C the mechanical properties indicated in table 5 were determined.

EXAMPLES 23 AND 24

Following the procedure of example 22, a series of crosslinked fluorinated polyurethanes was prepared. The prepolymers of examples 8 and 9 and, as crosslinking agents, the following mixtures were utilized:

A: 100 eq. of BDO + 100 eq. of TMP (trimethylolpropane)

B: 100 eq. of OFOD + 100 eq. of TMP.

Table 5 indicates the various formulations and the characteristics thereof.

TABLE 5

| EXAMPLE | PREPOLYMER (ref. ex.) | Cross-linking mixture | % b.weight of cross-linking mixture | Tg (°C) | Hardness (Shore A) | Hardness (Shore D) | $M_{100\%}$ ($kg/cm^2$) | Tens.streng. ($kg/cm^2$) | Elong.at br. (%) |
|---|---|---|---|---|---|---|---|---|---|
| 22 | 9 | A | 3.35 | -112 | - | 45 | 92.4 | 254 | 484 |
| 23 | 9 | B | 6.82 | -112 | - | 43 | 72.2 | 220 | 547 |
| 24 | 8 | A | 3.45 | -115 | 66 | - | 31.5 | 62 | 476 |

EXAMPLE 25

Preparation of a thermoplastic fluorinated polyurethane and evaluation of its coating characteristics.

Preparation of the polymer

The preparation was carried out by using, as perfluoropolyether diol, a ZDOL having an eq. weight of 896. 100 g of ZDOL were reacted with 66 g of HMDI and 17.6 g of BDO according to the method described in example 10, thereby obtaining a polymer containing 54% by weight of macroglycol. This polymer was soluble in hot THF and in cold 2,2,2-trifluoroethanol.

Determination of the polymer characteristics

The resulting polyurethane was dissolved in 2,2,2-trifluoroethanol in order to obtain a solution at 30% by weight. The solution was spread on a copper sheet. After evaporation of the solvent at room temperature, a transparent film (thickness 5 $\mu$m) having a refractive index $n_D^{20}$ of 1.42 was obtained.

On the film, the following electric properties were determined:

| | | |
|---|---|---|
| Dielectric constant | (ASTM D150/50 Hz) | 2.5 |
| Dispersion factor | (ASTM D150/50 Hz) | $6.10^{-3}$ |
| Dielectric strength | (ASTM D149/kV $cm^{-1}$ | 21 |
| Volume resistivity | (ASTM D257/52 cm) | $5.10^{15}$ |

EXAMPLE 26

A possible application for the polyurethanes of the present invention is their use in the lubrication and protection of surfaces subjected to friction and wear such as, for example, magnetic recording means and surfaces of accessory elements, slides and guides made of metals or sintered alloys.

The polyurethane of example 25 was dissolved in 2,2,2-trifluoroethanol and the solution was utilized to prepare films having a thickness of 8 nm.

For comparative purposes an overcoat was prepared by using an isocyanate-terminated perfluoropolyether of US-A-3 810 874 (structure 12), ZDISOC, dissolved in 1,1,2-trichlorotrifluoroethane, in the presence of a crosslinking catalyst, operating at backing temperatures of 120 °C for 8 hours.

The polymer films were characterized by means of the following measurements:

(a) Friction coefficient:

Determined on metal-plated (rigid) discs, in which the magnetic layer consisted of a Co/Ni or Co/Ni/P alloy;

The following results were obtained:

| | Friction coefficient |
|---|---|
| ZDISOC overcoat | |
| - Thickness 8 nm | 0.35 |
| Polyurethane overcoat of example 26 | |
| - Thickness 8 nm | 0.15 |

(b) Contact angle:

Determined by depositing fluorinated polyurethane overcoat layers on floppy discs wherein the magnetic layer consisted of $\gamma$-$Fe_2O_3$, dispersed in a polyurethane plastic matrix. The following results

were obtained:

| | Contact angle with $H_2O$ |
|---|---|
| ZDISOC overcoat | |
| - Thickness 20 nm | 55 |
| Polyurethane overcoat of example 26 | |
| - Thickness 20 nm | 105 |

(c) Wear test:

The wear protection was determined, on a 5.25 floppy disc, using an Mnzn Ferrite 10 g load head, by carrying out a start and stop test. During this test, the storage unit was subjected to start and stop cycles during which the head sliding causes a degradation of the magnetic surface and, at last, an abrasion of same. The purpose of the protective polymeric layers based on fluorinated polyurethanes is to reduce as much as possible the wear caused by these conditions.

The life time of the magnetic means is expressed as the number of start and stop cycles carried out until a 10% loss in signal or an unacceptable dropout were observed. The following results were obtained:

| | CSS No. (cyclic start and stop) |
|---|---|
| ZDISOC overcoat | |
| - Thickness 8 nm | 10000 |
| Polyurethane overcoat of example 26 | |
| - Thickness 8 nm | 29000 |

(d) Stiction test after long storage periods:

The mechanical surface characteristics were determined by evaluating the tangential stress necessary to cause the detaching and starting of a loaded head after a predetermined storage period (at 20 °C, 85% relative humidity for 10 hours). This stress is, usually, called "stiction" and must be as low as possible in order to avoid damage in the head holder system during the starting of a rigid disc storage unit. The test was carried out on a 5.25 floppy disc as above and with an MnZn Ferrite 10 g load head. The following results were obtained:

| | Stiction |
|---|---|
| ZDISOC overcoat | |
| - Thickness 8 nm | 5 |
| Polyurethane overcoat of example 26 | |
| - Thickness 8 nm | 0.15 |

EXAMPLE 27 (Comparative Test)

Polyurethane prepared according to example H of EP-A-192 190.

A solution of 9 g (26.7 millimoles) of bisphenol AF in a Delifrene(R)/acetone (80/20 by volume) mixture was added, in a nitrogen atmosphere, to 80 g (26.7 millimoles) of α,ω-bis(tolylisocyanate)-polyoxyperfluoroalkylene having a molecular weight of 3000 and 0.25 g of an 0.25 M solution of butyl tin acetate in acetone.

The resulting mixture was allowed to react at 50 °C for 3 hours under gradual removal of the solvents. A homogeneous and viscous mixture was obtained which, after degassing, was poured into a mould and allowed to stand at 50 °C for 24 hours and at 100 °C for 6 hours.

The polyurethane obtained was thermoelastomeric, transparent, soluble in Delifrene(R), exhibited a Tg of -120 °C and was characterized by the following mechanical properties:

| | |
|---|---|
| - Hardness (Shore A/3") | 73 |
| - Elongation at break | 128% |
| - Tensile strength | 21.8 kg/cm$^2$. |

From a comparison of the above characteristics and the ones of example 17, in which an aliphatic diol instead of bisphenol AF was used and the ratio between perfluoropolyether and diol was maintained unchanged, it is apparent that, with hardness values of the same order, the mechanical properties of the product according to the present invention are by far superior.

EXAMPLE 28 (Comparative Test)

In a nitrogen atmosphere, 33.3 g (10.9 millimoles) of α,ω-bis(isophorone diisocyanate)-polyoxyperfluoroalkylene of formula

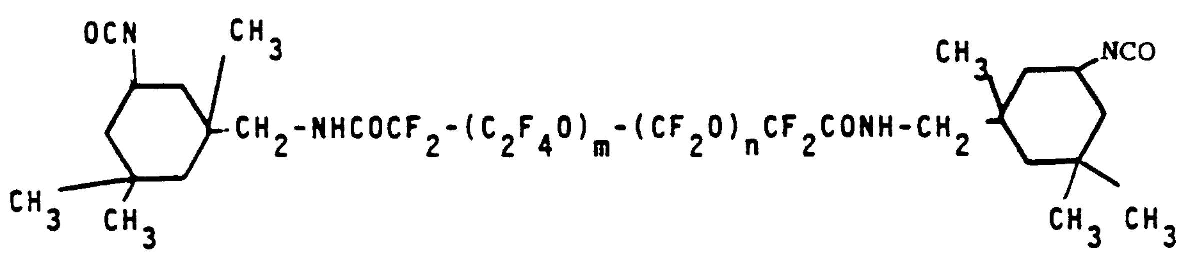

having a molecular weight equal to 3,048, 10.9 g (5.45 millimoles) of α,ω-bis(hydroxymethyl)-polyoxyperfluoroalkylene with a molecular weight equal to 2000 and 0.8 g of a solution of 0.20 M of butyl tin

dilaurate in acetone were mixed.

The resulting mixture was allowed to react at 50 °C for 3 hours. During this time a progressive viscosity increase could be observed. Upon completion of the reaction 5.9 g (2.75 millimoles) of product of formula

$$HOCH_2\text{-}(OH)CH\text{-}CH_2O\text{-}CH_2CF_2O\text{-}(C_2F_4O)_m(CF_2O)_n\text{-}CF_2CH_2\text{-}OCH_2CH(OH)\text{-}CH_2OH$$

wherein m and n are defined as in the case of class a) above, (M.W. = 2,148) were added and, after mixing and degassing, the whole mixture was poured into a mould. After 48 hours at 50 °C and 24 hours at 100 °C the mass remained tacky and not consistent.

## Claims

1. Polyurethanes comprising (a) rubber-like polyoxyperfluoroalkylene blocks and (b) rigid blocks having an average molecular weight of from 28 to 1000 and being derived from optionally fluorinated aliphatic diols and/or aliphatic and/or aromatic diamines having not more than 12 carbon atoms, the number of the rigid blocks (b) being equal to or higher than the number of the rubber-like blocks (a), said polyurethanes being prepared by using aliphatic, cycloaliphatic and/or aromatic diisocyanates and/or perfluoropolyether diisocyanates.

2. Polyurethanes according to claim 1, wherein the rubber-like blocks (a) are composed of sequences, having an average molecular weight of from 1500 to 15000, of one or more oxyperfluoroalkylene units derived from perfluoropolyether diols belonging to the following classes of compounds:

a)

$$HO\text{-}(CH_2CH_2O)_z\text{-}CH_2\text{-}CF_2O\text{-}(C_2F_4O)_m(CF_2O)_n\text{-}CF_2\text{-}CH_2\text{-}(OCH_2CH_2)_z\text{-}OH$$

wherein z independently ranges from 0 to 3 and the ratio m/n is from 0.2 to 2, m and n having values such that the molecular weight is within the range indicated above;

b) $HO\text{-}CH_2CF_2\text{-}(C_3F_6O)_r(C_2F_4O)_s(CFXO)_t\text{-}CF_2CH_2\text{-}OH$

wherein:

X = F or $CF_3$; r, s, t independently are 0 or integers of from 1 to 100, with the proviso that (r + s) is different from 0 and r, s and t have values such that the molecular weight is within the above range;

c)

$$HOCH_2CF_2CH_2\text{-}(OCF_2CF_2CH_2)_p\text{-}OR_fO\text{-}(CH_2CF_2CF_2O)_qCH_2CF_2CH_2OH$$

wherein:

$R_f$ represents a fluoroaliphatic group containing heteroatoms in the chain, p and q each are integers of from 1 to 100, with the proviso that (p + q) >2 and that $R_f$, p and q are such that the molecular weight is within the above range;

d)

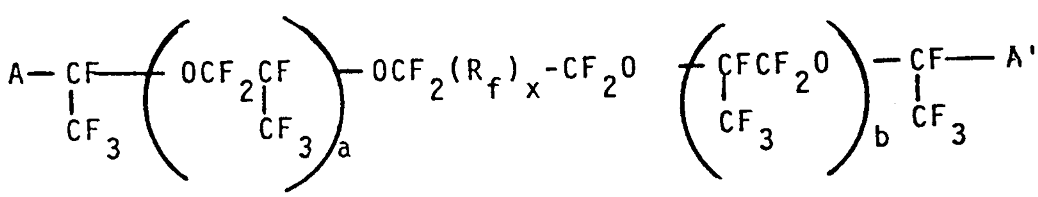

wherein:

$R_f$ is a fluoroaliphatic group as defined under c), A and A' are end groups containing -OH, x is 0 or 1 and a and b each are integers of from 1 to 100, with the proviso that (a + b) >2 and that $R_f$, x, a

and b are such that the molecular weight is in the above range.

3. Polyurethanes according to any one of claims 1 and 2, which are crosslinked and are obtainable by utilizing, for their preparation, polyols and/or amines and/or isocyanates having a functionality of higher than 2.

4. Polyurethanes according to any one of claims 1 to 3, wherein the rubber-like blocks (a) are composed of sequences, having a molecular weight from 1500 to 15000, of one or more oxyperfluoroalkylene units derived from perfluoropolyether diisocyanates or belonging to the perfluoropolyether classes indicated in claim 2.

**Patentansprüche**

1. Polyurethane, umfassend (a) Kautschuk-artige Polyoxyperfluoralkylen-Blöcke und (b) starre Blöcke mit einen durchschnittlichen Molekulargewicht von 28 bis 1000 und abgeleitet von gegebenenfalls fluorierten aliphatischen Diolen und/oder aliphatischen und/oder aromatischen Diaminen mit nicht mehr als 12 Kohlenstoffatomen, wobei die Anzahl der starren Blöcke (b) gleich oder höher als die Anzahl der Kautschuk-artigen Blöcke (a) ist, wobei die Polyurethane durch Verwendung aliphatischer, cycloaliphatischer und/oder aromatischer Diisocyanate und/oder Perfluorpolyether-Diisocyanate hergestellt sind.

2. Polyurethane nach Anspruch 1, in welchen die Kautschukartigen Blöcke (a) aus Abfolgen, mit einem durchschnittlichen Molekulargewicht von 1500 bis 15000, von einer oder mehreren von Perfluorpolyetherdiolen, die zu den folgenden Klassen von Verbindungen gehören, abgeleiteten Oxyperfluoralkylen-Einheiten zusammengesetzt sind:

a) $HO\text{-}(CH_2CH_2O)_z\text{-}CH_2\text{-}CF_2O\text{-}(C_2F_4O)_m(CF_2O)_n\text{-}CF_2\text{-}CH_2\text{-}(OCH_2CH_2)_z\text{-}OH$

worin z unabhängig im Bereich von 0 bis 3 liegt und das Verhältnis m/n 0,2 bis 2 beträgt, wobei m und n solche Werte aufweisen, daß das Molekulargewicht innerhalb des oben angegebenen Bereichs liegt;

b) $HO\text{-}CH_2CF_2\text{-}(C_3F_6O)_r(C_2F_4O)_s(CFXO)_t\text{-}CF_2CH_2\text{-}OH$

worin:
X = F oder $CF_3$; r, s, t unabhängig 0 oder ganze Zahlen von 1 bis 100 sind, mit der Maßgabe, daß (r + s) von 0 verschieden ist und r, s und t solche Werte aufweisen, daß das Molekulargewicht innerhalb des obigen Bereichs liegt;

c)

$HOCH_2CF_2CH_2\text{-}(OCF_2CF_2CH_2)_p\text{-}OR_fO\text{-}(CH_2CF_2CF_2O)_qCH_2CF_2CH_2OH$

worin:
$R_f$ für eine fluoraliphatische Gruppe, die Heteroatome in der Kette enthält, steht, p und q jeweils ganze Zahlen von 1 bis 100 sind, mit der Maßgabe, daß (p + q) >2 und daß $R_f$, p und q derart sind, daß das Molekulargewicht innerhalb des obigen Bereichs liegt;

d)

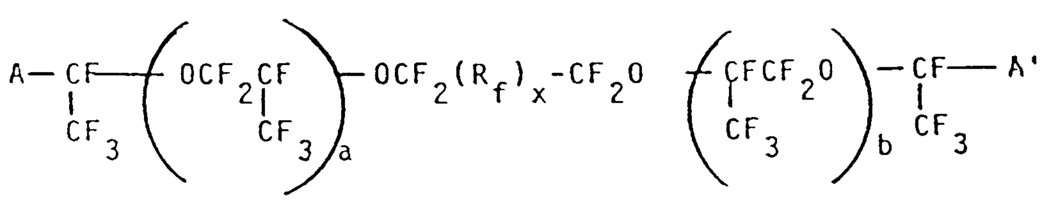

worin:

$R_f$ eine wie unter c) definierte fluoraliphatische Gruppe ist, A und A' -OH-enthaltende Endgruppen sind, x 0 oder 1 ist und a und b jeweils ganze Zahlen von 1 bis 100 sind, mit der Maßgabe, daß (a + b) >2 und daß $R_f$, x, a und b derart sind, daß das Molekulargewicht in dem obigen Bereich liegt.

**3.** Polyurethane nach irgendeinem der Ansprüche 1 und 2, die vernetzt sind und durch Verwendung, für ihre Herstellung, von Polyolen und/oder Aminen und/oder Isocyanaten mit einer Funktionalität von größer 2 erhältlich sind.

**4.** Polyurethane nach irgendeinem der Ansprüche 1 bis 3, in welchen die Kautschuk-artigen Blöcke (a) aus Abfolgen, mit einem Molekulargewicht von 1500 bis 15000, von einer oder mehreren Oxyperfluoralkylen-Einheiten, die von Perfluorpolyether-Diisocyanaten abgeleitet sind oder zu den Perfluorpolyether-Klassen die in Anspruch 2 angegeben sind, gehören, zusammengesetzt sind.

## Revendications

**1.** Polyuréthanes comprenant:

(a) des séquences de polyoxyperfluoroalkylène de type caoutchouc, et

(b) des séquences rigides ayant un poids moléculaire moyen compris entre 28 et 1000 et dérivant de diols aliphatiques éventuellement fluorés et/ou de diamines aromatiques et/ou aliphatiques ne comportant pas plus de 12 atomes de carbone, le nombre de séquences rigides (b) étant supérieur ou égal au nombre de séquences de type caoutchouc (a),

lesdits polyuréthanes étant préparés par utilisation de diisocyanates de perfluoropolyéther et/ou de diisocyanates aliphatiques, cycloaliphatiques et/ou aromatiques.

**2.** Polyuréthanes selon la revendication 1, caractérisés en ce que les séquences de type caoutchouc (a) sont composées de séquences ayant un poids moléculaire moyen compris entre 1500 et 15 000, d'une ou de plusieurs unités oxyperfluoroalkylène obtenues à partir de diols de perfluoropolyéthers provenant des groupes de composés suivantes:

a)

$$HO-(CH_2CH_2O)_z-CH_2-CF_2O-(C_2F_4O)_m(CF_2O)_n-CF_2-CH_2-(OCH_2CH_2)_zOH$$

dans laquelle:

z sont indépendamment sélectionnés entre 0 et 3, et le rapport m/n est compris entre 0,2 et 2, m et n ayant des valeurs telles que le poids moléculaire soit compris dans l'intervalle indiqué ci-dessus;

b) $HO-CH_2CF_2-(C_3F_6O)_r(C_2F_4O)_s(CFXO)_t-CF_2CH_2-OH$

dans laquelle:

X représente ou $CF_3$,

r, s et t sont, indépendamment l'un de l'autre, 0 ou représentent des nombres entiers compris entre 1 et 100, à condition que (r + s) soit différent de 0 et que r, s et t aient des valeurs telles que le poids moléculaire soit compris dans l'intervalle indiqué ci-dessus;

c) $HOCH_2CF_2CH_2-(CF_2CF_2CH_2)_p-OR_fO-(CH_2CF_2CF_2O)_q-CH_2CF_2CH_2OH$

dans laquelle:

$R_f$ représente un radical fluoroaliphatique, de préférence un radical perfluoroalkylène contenant également des hétéroatomes

p et q représentent chacun des nombres entiers compris entre 1 et 100, à condition que (p + q) soit supérieur à 2 et que $R_f$, p et q soient tels que le poids moléculaire soit compris dans l'intervalle défini ci-dessus.

d)

$$A-\underset{CF_3}{CF}-\left(OCF_2\underset{CF_3}{CF}\right)_a-OCF_2(R_f)_x-CF_2O-\left(\underset{CF_3}{CF}CF_2O\right)_b-\underset{CF_3}{CF}-A'$$

dans laquelle:

- $R_f$ représente un radical fluoroaliphatique tel que défini sous c),
- A et A' représentent tous les deux des groupes terminaux contenant -OH,
- x est égal à 0 ou 1, et
- a et b représentent tous deux des nombre entiers compris entre 1 et 100, à condition que (a+b) soit supérieur à 2 et que $R_f$, x, a et b soient tels que le poids moléculaire soit compris dans l'intervalle défini ci-dessus.

**3.** Polyuréthannes selon l'une quelconque des revendications 1 et 2, qui sont réticulés et que l'on peut obtenir en utilisant pour leur préparation les polyols et/ou les amines et/ou les isocyanates ayant une fonctionnalité supérieure à 2.

**4.** Polyuréthannes selon l'une quelconque des revendications 1 à 3, caractérisés en ce que les séquences de type caoutchouc (a) sont composées de séquences ayant un poids moléculaire compris entre 1500 et 15 000, d'une ou de plusieurs unités oxyperfluoroalkylène obtenues à partir de diisocyanates de perfluoropolyéther ou provenant des groupes de perfluoropolyéther décrits dans la revendication 2.